# EUROPEAN PATENT APPLICATION

(11) **EP 4 434 871 A1**
(43) Date of publication of application: **25.09.2024**
(21) Application number: 22910749.5
(22) Date of filing: 25.11.2022
(51) Int. Cl.: B63B 25/08, B63B 25/16, B63J 2/14, F17C 13/00

(54) **FLOATING BODY AND METHOD FOR DISCHARGING INERT GAS FROM FLOATING BODY**

(30) Priority: 21.12.2021 JP 2021207357
(71) Applicant: Mitsubishi Shipbuilding Co., Ltd., Yokohama-shi Kanagawa 220-8401 (JP)
(72) Inventor: YAMADA Daisuke, Yokohama-shi, Kanagawa 220-8401 (JP)
(74) Representative: Studio Torta S.p.A.
(86) International application number: PCT/JP2022/043530
(87) International publication number: WO 2023/120031

(57) **Abstract**

A floating body according to the present disclosure comprises: a floating main body that floats on water; a tank that houses an inert gas and ammonia; a mixed gas introduction unit to which a mixed gas of the inert gas and the ammonia is introduced; a cooling unit that cools the mixed gas inside the mixed gas introduction unit, at a temperature at which only the ammonia in the mixed gas can be condensed; an atmosphere release line that can release the inert gas inside the mixed gas introduction unit to the atmosphere; and a pressure regulating valve that regulates the pressure inside the mixed gas introduction unit, when releasing the inert gas to the atmosphere, to a pressure at which the ammonia can be maintained in the liquid phase.

## Description

### Technical Field

The present disclosure relates to a floating structure and a method for discharging an inert gas from the floating structure.

Priority is claimed on Japanese Patent Application No. 2021-207357, filed on December 21, 2021, the content of which is incorporated herein by reference.

### Background Art

PTL 1 discloses a technique for liquefying and separating ammonia gas from a raw syngas obtained by causing a mixed gas of nitrogen and hydrogen to react with each other in a pressurized state. However, in a case where the ammonia gas is liquefied and separated, a large amount of energy is consumed. Therefore, in PTL 1, a method for synthesizing ammonia by an electrolysis method and separating and recovering ammonia by using an ammonia separation membrane is proposed.

### Citation List

### Patent Literature

[PTL 1] International Publication No. WO2017/149718

### Summary of Invention

### Technical Problem

Meanwhile, in a floating structure such as a ship, introduction of ammonia, which is a decarbonized fuel, as a fuel of a combustion device such as a main engine is under consideration. In a case where ammonia is used as a fuel of the combustion device, boil off gas (BOG) is generated even in a tank for storing the ammonia. Therefore, the BOG needs to be treated. Further, in a case where the ammonia is used as the fuel as described above, an inert gas such as a seal gas used in a device such as a pump or a purge gas used for replacement of a pipe internal atmosphere may be mixed into the BOG. The mixing of the inert gas into the BOG causes a decrease in reliquefaction efficiency of the BOG or a decrease in calorific value in a case where the BOG is used as fuel. Then, since the amount of the inert gas mixed into the BOG gradually increases, it is necessary to remove the inert gas. However, in order to remove the inert gas without mixing the ammonia gas as much as possible, there is a problem in that the worker needs to be skilled or the ammonia gas needs to be absorbed in water and then subjected to stripping or the like.

The present disclosure has been made in view of the above circumstances, and an object thereof is to provide a floating structure and a method for discharging an inert gas from the floating structure, in which an inert gas can be easily discharged.

### Solution to Problem

In order to solve the above problems, the following configuration is adopted.

According to the floating structure of one aspect of the present disclosure, there is provided a floating structure including a floating main structure that floats on water; a tank in which ammonia is stored together with an inert gas; a mixed gas introduction unit into which a mixed gas of the inert gas and the ammonia is introduced; a cooling unit that cools the mixed gas in the mixed gas introduction unit at a temperature at which only the ammonia of the mixed gas is condensable; an atmosphere releasing line through which the inert gas in the mixed gas introduction unit is capable of being released to an atmosphere; and a pressure adjustment valve that adjusts a pressure in the mixed gas introduction unit when the inert gas is released to the atmosphere to a pressure at which the ammonia is capable of being maintained in a liquid phase.

According to the inert gas discharging method of a floating structure of one aspect of the present disclosure, there is provided a method for discharging an inert gas from a floating structure in which ammonia is stored together with the inert gas, the method including cooling a mixed gas of the inert gas and the ammonia inside a mixed gas introduction unit into which the mixed gas is introduced to condense only the ammonia and release the inert gas into an atmosphere; and adjusting a pressure inside the mixed gas introduction unit to a pressure that is capable of maintaining the condensed ammonia in a liquid phase when the inert gas is released into the atmosphere.

### Advantageous Effects of Invention

According to a floating structure and a method for discharging an inert gas from the floating structure according to the present disclosure, the inert gas can be easily discharged.

### Brief Description of Drawings

Fig. 1 is a diagram showing a schematic configuration of a floating structure according to an embodiment of the present disclosure.
Fig. 2 is a diagram showing a schematic configuration of a fuel supply system, a purge system, and a BOG treatment system according to a first embodiment of the present disclosure.
Fig. 3 is a Mollier chart of ammonia in which a vertical axis represents a pressure and a horizontal axis represents a specific enthalpy.
Fig. 4 is a diagram showing a configuration of a BOG treatment system in a modification example of the first embodiment of the present disclosure.
Fig. 5 is a diagram showing a configuration of a BOG treatment system according to a second embodiment of the present disclosure.
Fig. 6 is a diagram showing an inert gas separator and a cooling device in a first modification example of the second embodiment of the present disclosure.
Fig. 7 is a diagram showing a configuration of a BOG treatment system according to a second modification example of the second embodiment of the present disclosure.
Fig. 8 is a diagram showing a configuration of a BOG treatment system according to a third embodiment of the present disclosure.
Fig. 9 is a diagram corresponding to Fig. 8 in a fourth embodiment of the present disclosure.
Fig. 10 is a diagram corresponding to Fig. 9 in a fifth embodiment of the present disclosure.
Fig. 11 is a diagram corresponding to Fig. 10 in a modification example of the fifth embodiment of the present disclosure.

### Description of Embodiments

Next, a floating structure and a method for discharging an inert gas from the floating structure according to an embodiment of the present disclosure will be described with reference to the drawings.

### <<First Embodiment>>

### (Configuration of Floating structure)

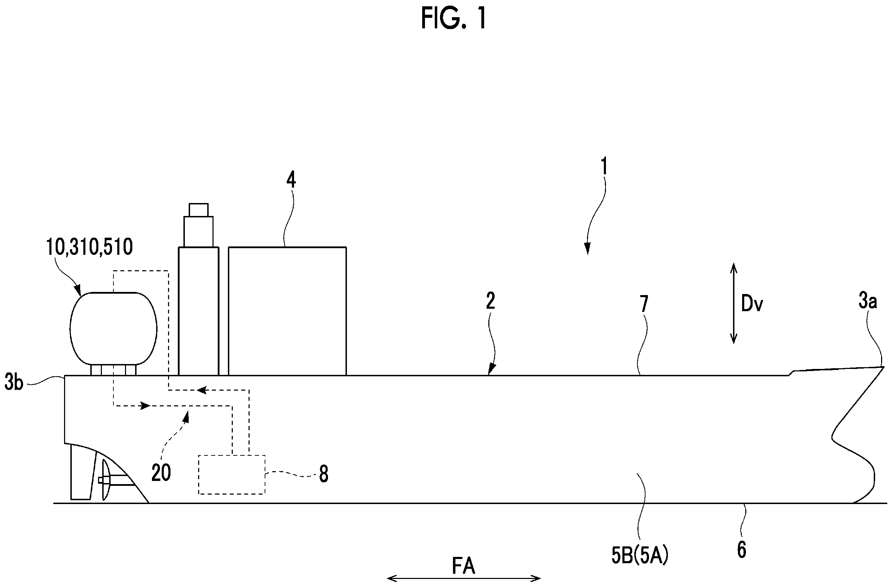

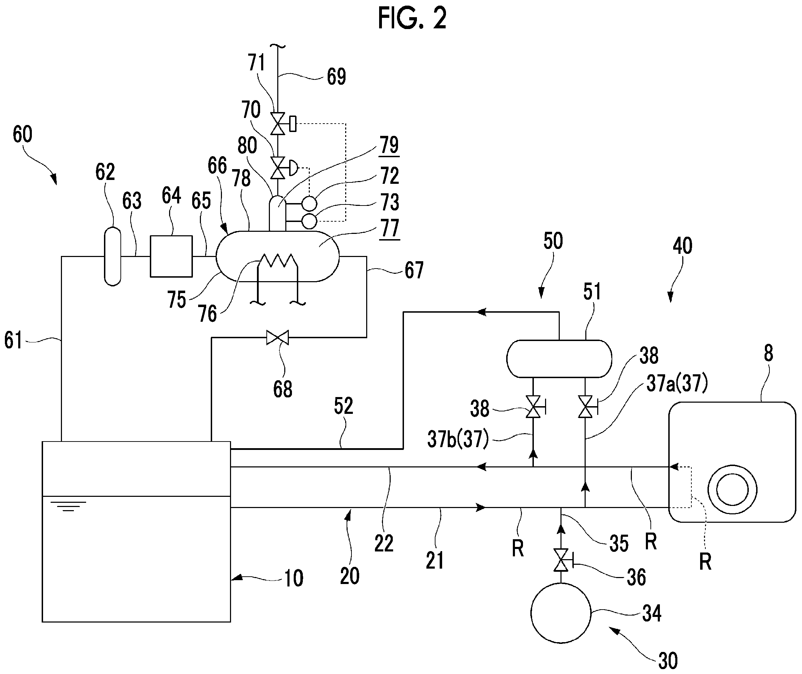

As shown in Figs. 1 and 2, a floating structure 1 of a first embodiment includes a floating main structure 2, a superstructure 4, a combustion device 8, an ammonia tank 10, a fuel supply system 20, a gas supply system 30, a purge system 40, an ammonia recovery system 50, and a BOG treatment system 60. As the floating structure 1 in the present embodiment, a ship using ammonia as fuel will be described as an example. The type of ship of the floating structure 1 is not limited to a specific type. Examples of the ship type of the floating structure 1 include a liquefied gas carrier, a ferry, a RORO ship, a car carrier, and a passenger ship.

The floating main structure 2 includes a pair of broadsides 5A and 5B and a bottom 6 forming an outer shell of the floating main structure 2. The broadsides 5A and 5B include a pair of broadside skins respectively forming right and left broadsides. The bottom 6 includes a bottom skin connecting the broadsides 5A and 5B. The pair of broadsides 5A and 5B and the bottom 6 form the outer shell of the floating main structure 2 to have a U-shape in a cross section orthogonal to a bow-stern direction FA.

The floating main structure 2 further includes an upper deck 7 which is a through deck which is disposed in the uppermost layer. The superstructure 4 is formed on the upper deck 7. An accommodation space and the like are provided inside the superstructure 4. In the floating structure 1 of the present embodiment, for example, a cargo space (not shown) for loading cargo is provided closer to a bow 3a side than the superstructure 4 in the bow-stern direction FA.

The combustion device 8 is a device that generates thermal energy by combusting a fuel and is provided inside the floating main structure 2. Examples of the combustion device 8 include an internal combustion engine used in a main engine for propulsion of the floating structure 1, an internal combustion engine used in a power generation facility that supplies power into the ship, and a boiler that generates steam as a working fluid. In the combustion device 8 of the present embodiment, as a fuel, ammonia and another fuel such as light oil different from ammonia can be used by switching.

The ammonia tank 10 is a tank that stores liquid ammonia (in other words, liquefied ammonia). The ammonia tank 10 is installed on the upper deck 7 closer to a stern 3b side than the superstructure 4. Disposition of the ammonia tank 10 is an example and is not limited to the disposition on the upper deck 7 closer to the stern 3b side than the superstructure 4. The ammonia tank 10 of the present embodiment stores liquefied ammonia as a fuel for the combustion device 8.

### (Fuel Supply System)

The fuel supply system 20 connects the combustion device 8 and the ammonia tank 10 and is configured to supply at least the ammonia stored in the ammonia tank 10 to the combustion device 8.

As shown in Fig. 2, the fuel supply system 20 includes a supply line 21 and a return line 22.

The supply line 21 is a pipe that connects the ammonia tank 10 and the combustion device 8. The ammonia as the fuel flows from the ammonia tank 10 toward the combustion device 8 in the supply line 21. That is, the ammonia stored in the ammonia tank 10 is introduced into the combustion device 8 via the supply line 21. The supply line 21 is provided with a pump (not shown) for pumping ammonia from the ammonia tank 10 to the combustion device 8, a heat exchanger (not shown) for adjusting the temperature of the ammonia in the supply line 21 guided to the combustion device 8 by the pump, and the like.

The return line 22 is a pipe that connects the combustion device 8 and the ammonia tank 10. One end of the return line 22 is connected to the combustion device 8, and the other end is connected to the ammonia tank 10. The return line 22 returns the surplus ammonia remaining unburned in the combustion device 8 to the ammonia tank 10.

### (Gas Supply System)

The gas supply system 30 is a system that supplies an inert gas (purge gas) for performing replacing, so-called purging, the ammonia in the flow channel R through which the ammonia as the fuel of the combustion device 8 flows with an inert gas such as nitrogen. The gas supply system 30 includes an inert gas supply unit 34, an inert gas supply pipe 35, and an inert gas supply valve 36. For example, an inert gas generated inside the floating main structure 2 by an inert gas generating device (not shown) or an inert gas stored in an inert gas tank (not shown) provided in the floating main structure 2 in advance can be used as the inert gas. The inert gas may be any gas that does not chemically react when in contact with the ammonia, and in the present embodiment, nitrogen is used as the inert gas.

The inert gas supply unit 34 supplies the inert gas to the inert gas supply pipe 35.

The inert gas supply pipe 35 connects the inert gas supply unit 34 and the flow channel R. More specifically, the inert gas supply pipe 35 connects the inert gas supply unit 34 and a purging target region of the flow channel R through which the ammonia as the fuel flows. The purging target regions exemplified in the present embodiment are the supply line 21, the return line 22, and the flow channel R formed in the combustion device 8. The inert gas supply pipe 35 exemplified in the present embodiment is connected to the purging target region of the supply line 21 in the purging target region.

The inert gas supply valve 36 is provided in the inert gas supply pipe 35. The inert gas supply valve 36 is brought into a closed state at a normal time to shut off supply of an inert gas from the inert gas supply unit 34 to the purging target region. Here, the normal time refers to a time when ammonia can be supplied to the combustion device 8, such as a time when the combustion device 8 is in operation. In the normal time, the ammonia can be supplied from the ammonia tank 10 to the combustion device 8 through the supply line 21, and the surplus ammonia is returned from the combustion device 8 to the ammonia tank 10 via the return line 22.

The inert gas supply valve 36 is switched from a closed state to an open state at a time of an emergency stop or a long-term stop of the combustion device 8. In other words, when purging ammonia remaining in the purging target region, an operation is performed to switch the closed state to the open state. At this time, the supply of the ammonia from the ammonia tank 10 to the combustion device 8 is stopped. Then, when the inert gas supply valve 36 is switched from the closed state to the open state, the inert gas can be supplied from the inert gas supply unit 34 to the purging target region.

### (Purge System)

The purge system 40 is a system that guides the ammonia remaining in the flow channel R of the supply line 21, the combustion device 8, and the return line 22 to the ammonia tank 10. The purge system 40 in the present embodiment includes a purge line 37 and a purge valve 38.

In the present embodiment, as the purge line 37, a first purge line 37a connected to the supply line 21 and a second purge line 37b connected to the return line 22 are provided. The purge lines 37 guide the fluid discharged by purging from the supply line 21 and the return line 22 to the ammonia recovery system 50. In the present embodiment, the fluid discharged by the purge line 37 is introduced into the temporary storage unit 51 of the ammonia recovery system 50.

One purge valve 38 is provided for each of the purge lines 37. The purge valve 38 is normally in a closed state. The purge valve 38 is opened at the timing of the start of the supply of the inert gas by the gas supply system 30 or at a predetermined timing after the start of the supply of the inert gas by the gas supply system 30. When the purge valve 38 is in an open state, the mixed fluid of the inert gas and the ammonia is introduced into the temporary storage unit 51 via the purge line 37. Then, the ammonia remaining in the flow channel R of the supply line 21, the combustion device 8, and the return line 22 is replaced with the inert gas.

The ammonia recovery system 50 is a system that returns the ammonia discharged together with the inert gas from the fuel supply system 20 to the ammonia tank 10 via the purge system 40. The ammonia recovery system 50 includes a temporary storage unit 51 and a recovery line 52.

The temporary storage unit 51 is a container that temporarily stores the fluid discharged from the fuel supply system 20 by the purge system 40. The ammonia of the liquid stored in the temporary storage unit 51 may be vaporized.

The recovery line 52 is a pipe that guides the mixed fluid containing the ammonia from the temporary storage unit 51 to the ammonia tank 10. The recovery line 52 allows the internal space of the temporary storage unit 51 and the gas phase of the ammonia tank 10 to communicate with each other. The mixed fluid of the inert gas and the ammonia stored in the temporary storage unit 51 is introduced from the recovery line 52 into the ammonia tank 10 by using the pressure of the fluid discharged by the purge system 40, a differential pressure between the ammonia tank 10 and the temporary storage unit 51, or the like. The mixed fluid may be introduced into the ammonia tank 10 by using a pump, a blower, or the like. The ammonia recovery system 50 may include an oil catch tank for recovering oil stored inside the temporary storage unit 51 by taking the oil to the outside of the temporary storage unit 51, and an oil mist separator for recovering mist-like oil flowing inside the recovery line 52 together with the ammonia and the other gas to the oil catch tank.

### (BOG Treatment System)

The BOG treatment system 60 is a system that treats a mixed gas of an inert gas and ammonia. The mixed gas in the present embodiment is a gas present in a gas phase of the ammonia tank 10, and mainly includes a boil off gas (BOG) generated by vaporization of the liquefied ammonia in the ammonia tank 10, and a gas of a mixed fluid flowing in from the ammonia recovery system 50. Hereinafter, a gas in which the ammonia gas present in the gas phase of the ammonia tank 10 and the inert gas are mixed is simply referred to as a mixed gas.

The BOG treatment system 60 includes a first treatment line 61, a mist separator 62, a second treatment line 63, a compressor 64, a third treatment line 65, a condenser 66, a reliquefying line 67, an expansion valve 68, an atmosphere releasing line 69, a pressure adjustment valve 70, a shutoff valve 71, a pressure detecting unit 72, and an ammonia detecting unit 73.

The first treatment line 61 is a pipe that guides the mixed gas in the ammonia tank 10 to the mist separator 62.

The mist separator 62 removes droplets from the mixed gas introduced into the first treatment line 61. The mixed gas from which the droplets are removed by the mist separator 62 is substantially only the gas. The droplets removed by the mist separator 62 are returned to a tank such as the ammonia tank 10 in which the liquefied ammonia is stored via the pipe (not shown). In a case where the mixed gas flowing through the first treatment line 61 does not contain droplets or the like, or in a case where the mist separator 62 is not required, the mist separator 62 may be omitted.

The second treatment line 63 is a pipe that guides the mixed gas from which the droplets are removed by the mist separator 62 to the compressor 64.

The compressor 64 compresses the mixed gas introduced by the second treatment line 63. The mixed gas compressed by the compressor 64 is increased in temperature to become a high-temperature and high-pressure mixed gas. As the compressor 64 of the present embodiment, a compressor used in an engine or the like different from the combustion device 8 (main engine) or a gas compressor of a reliquefaction device can be given as an example.

The third treatment line 65 is a pipe that guides the mixed gas compressed by the compressor 64 to the condenser 66.

The condenser 66 cools the high-pressure mixed gas compressed by the compressor 64 to condense only the ammonia. In other words, only the ammonia gas is condensed (liquefied) without condensing the inert gas in the mixed gas. The condenser 66 includes a casing (mixed gas introduction unit) 75 and a heat exchanger (cooling unit) 76. The casing 75 defines a cooling space 77 for cooling the mixed gas introduced from the first treatment line 61. The reliquefying line 67 is connected to the casing 75.

The heat exchanger 76 is installed in the cooling space 77 of the casing 75, and cools the mixed gas by exchanging heat between the mixed gas introduced into the cooling space 77 and the refrigerant supplied from the outside of the condenser 66. The heat exchanger 76 cools the mixed gas in the casing 75 at a temperature at which only the ammonia in the mixed gas can be condensed. More specifically, the heat exchanger 76 cools the mixed gas at a temperature at which only the ammonia can be condensed under the pressure of the mixed gas introduced into the cooling space 77 of the casing 75. Examples of the refrigerant supplied to the heat exchanger 76 of the present embodiment include water (for example, seawater) around the floating structure 1 floating on the water and fresh water stored in a fresh water tank in the floating structure 1.

On the other hand, the atmosphere releasing line 69 is connected to the upper portion of the casing 75. The atmosphere releasing line 69 is capable of releasing the gas in the casing 75 to the atmosphere. More specifically, one end of the atmosphere releasing line 69 is connected to the uppermost position of the cooling space 77 formed in the casing 75, which is a place where the non-condensed gas is accumulated. In addition, the other end of the atmosphere releasing line 69 can be connected to, for example, a vent post (not shown) or the like.

The casing 75 of the embodiment includes a casing main body portion 78 that covers the heat exchanger 76, and a condenser tower portion 80 that protrudes upward from the casing main body portion 78 and forms a tower space (storage space) 79 that forms a part of the cooling space 77 inside thereof. The casing 75 of the present embodiment is intentionally provided with a place where the gas (gas substantially consisting only of the inert gas) which is not condensed even though it is cooled by the heat exchanger 76 is accumulated by the condenser tower portion 80. Accordingly, the inert gas remaining without being condensed in the casing 75 can be released into the atmosphere via the atmosphere releasing line 69. The condenser tower portion 80 of the present embodiment is formed to have a larger diameter than the atmosphere releasing line 69. The height of the condenser tower portion 80 may be any height as long as the position of the upper end of the tower space 79 is higher than the uppermost portion of the space in the casing 75.

The pressure detecting unit 72 detects the pressure in the casing 75. The pressure detecting unit 72 of the present embodiment detects the internal pressure of the tower space 79, in other words, the gas phase pressure of the tower space 79. The pressure detecting unit 72 of the present embodiment outputs the detection result to the pressure adjustment valve 70.

The pressure adjustment valve 70 is provided in the atmosphere releasing line 69, and is capable of adjusting the pressure in the casing 75 when the inert gas is released to the atmosphere to a pressure capable of maintaining the ammonia in a liquid phase. The pressure adjustment valve 70 of the present embodiment automatically adjusts the valve opening degree, based on the detection result of the pressure detecting unit 72, such that the pressure inside the casing 75 falls within a pressure range which is capable of maintaining the ammonia in the liquid phase. That is, the pressure in the cooling space 77 and the tower space 79 is adjusted by the pressure adjustment valve 70 such that the pressure in the casing 75 does not excessively decrease and the condensed ammonia is not vaporized again.

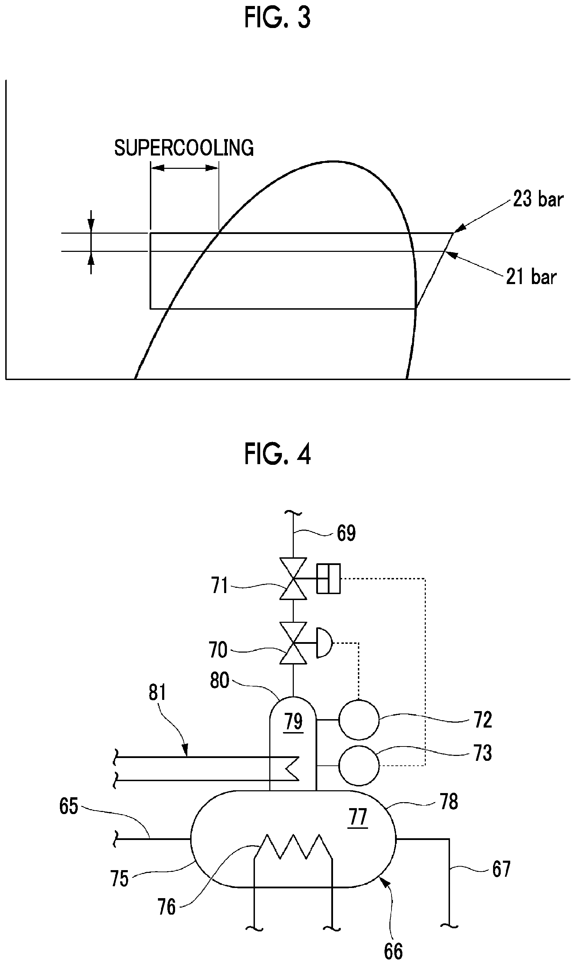

Fig. 3 is a Mollier chart of ammonia in which a vertical axis represents a pressure and a horizontal axis represents a specific enthalpy.

The condenser 66 of the present embodiment condenses the ammonia by cooling the mixed gas in a state where the pressure in the casing 75 is set to 23 bar (hereinafter, simply referred to as a high-pressure state) as an example. The pressure adjustment valve 70 adjusts the valve opening degree such that the pressure in the casing 75 does not fall below 21 bar (hereinafter, simply referred to as a low-pressure state) when the inert gas is released to the atmosphere via the atmosphere releasing line 69, for example. Accordingly, when the inert gas is released to the atmosphere, the range of reducing the specific enthalpy in the high-pressure state (the range of supercooling in Fig. 3) can be minimized, and in the low-pressure state, since the liquefied ammonia is not vaporized again, only the inert gas can be released to the atmosphere.

The ammonia detecting unit 73 is capable of detecting the concentration of the gas-phase ammonia inside the casing 75. The ammonia detecting unit 73 of the present embodiment detects the concentration of the gas-phase ammonia in the tower space 79. The ammonia detecting unit 73 of the present embodiment outputs the detection result to the shutoff valve 71. Here, the ammonia detecting unit 73 is not limited to the unit that detects the ammonia concentration, and for example, a density meter capable of measuring the density of ammonia may be used.

The shutoff valve 71 shuts off the atmosphere releasing line 69 in a case where the concentration of the gas-phase ammonia inside the casing 75 is higher than a predetermined upper limit value. On the other hand, the shutoff valve 71 opens the atmosphere releasing line 69 in a case where the concentration of the gas-phase ammonia inside the casing 75 is lower than a predetermined lower limit threshold value. The shutoff valve 71 of the present embodiment automatically shuts off the atmosphere releasing line 69 in a case where the concentration of the ammonia is higher than a predetermined upper limit value, based on the detection result of the ammonia detecting unit 73, and automatically opens the atmosphere releasing line 69 in a case where the concentration of the ammonia is lower than a predetermined lower limit threshold value. That is, in a case where the uncondensed ammonia gas is remained in the gas phase inside the casing 75, the shutoff valve 71 suppresses the release of the ammonia gas to the atmosphere together with the inert gas.

The reliquefying line 67 is a pipe that returns the ammonia (liquid) condensed by the condenser 66 to the ammonia tank 10 via the expansion valve 68.

The expansion valve 68 reduces the pressure of the ammonia condensed by the condenser 66 to adiabatically expand the ammonia and lower the temperature of the ammonia. The liquid ammonia of which the temperature is lowered is returned to the ammonia tank 10 via the reliquefying line 67. A reliquefaction device that reliquefies the BOG is configured by the compressor 64, the condenser 66, and the expansion valve 68 described above.

### (Operations and Effects)

According to the first embodiment, the condenser 66 into which the mixed gas of the inert gas and the ammonia is introduced, the heat exchanger 76 that cools the mixed gas in the casing 75 of the condenser 66 at a temperature at which only the ammonia in the mixed gas can be condensed, the atmosphere releasing line 69 through which the inert gas in the casing 75 of the condenser 66 can be released to the atmosphere, and the pressure adjustment valve 70 that adjusts the pressure in the casing 75 when the inert gas is released to the atmosphere to a pressure at which the ammonia can be maintained in a liquid phase are provided.

With such a configuration, only the ammonia present in the gas phase in the casing 75 of the condenser 66 can be liquefied to allow only the inert gas to remain in the gas phase in the casing 75. Then, the inert gas remaining in the gas phase can be released to the atmosphere via the atmosphere releasing line 69. Therefore, only the inert gas contained in the gas phase of the ammonia tank 10 can be removed.

Therefore, it is possible to easily discharge the inert gas present in the gas phase of the ammonia tank 10 without requiring the skill of the worker. Then, by discharging the inert gas, it is possible to suppress a decrease in the reliquefaction efficiency of the BOG and a decrease in calorific value in a case where the BOG is used as fuel.

According to the first embodiment, the casing 75 further includes the casing main body portion 78, and the condenser tower portion 80 that protrudes upward from the upper portion of the casing main body portion 78 and forms the tower space 79 capable of storing the inert gas. Then, the atmosphere releasing line 69 is connected to the condenser tower portion 80.

Accordingly, the inert gas can be discharged from the tower space 79 disposed higher in the space in the casing 75.

Therefore, it is possible to suppress the condensed ammonia from mixing with the gas discharged via the atmosphere releasing line 69.

According to the first embodiment, the casing 75 further includes the pressure detecting unit 72 that detects the pressure in the tower space 79, and the pressure adjustment valve 70 adjusts the valve opening degree such that the internal pressure of the casing 75 is within a pressure range which is capable of maintaining the ammonia in the liquid phase, based on the detection result of the pressure detecting unit 72.

Accordingly, in a case where the inert gas is released to the atmosphere via the atmosphere releasing line 69, the internal pressure of the casing 75 is reduced, so that the condensed ammonia can be prevented from being vaporized or the ammonia can be prevented from being condensed even when the ammonia is cooled.

According to the first embodiment, the ammonia detecting unit 73 capable of detecting the ammonia concentration in the tower space 79 and the shutoff valve 71 capable of opening and closing the atmosphere releasing line 69 are further provided. Then, the shutoff valve 71 shuts off the atmosphere releasing line 69 in a case where the ammonia concentration is higher than a predetermined upper limit value, based on the detection result of the ammonia detecting unit 73, and opens the atmosphere releasing line 69 in a case where the ammonia concentration is lower than a predetermined lower limit threshold value.

Accordingly, in a case where the ammonia concentration in the tower space 79 is high, it is possible to prevent the gas containing the ammonia from being released to the atmosphere via the atmosphere releasing line 69. In addition, in a case where the ammonia concentration is sufficiently low, the inert gas contained in the gas phase inside the casing 75 can be removed by releasing the inert gas to the atmosphere via the atmosphere releasing line 69.

According to the method for discharging an inert gas from the floating structure 1 of the first embodiment, the mixed gas is cooled inside the casing 75 of the condenser 66 into which the mixed gas of the inert gas and the ammonia is introduced, only the ammonia is condensed, the inert gas is released into the atmosphere, and when the inert gas is released into the atmosphere, the pressure inside the casing 75 of the condenser 66 is adjusted to a pressure at which the condensed ammonia can be maintained in a liquid phase.

In this manner, only the ammonia present in the gas phase in the casing 75 of the condenser 66 can be liquefied, and only the inert gas can remain in the gas phase in the casing 75. Then, the inert gas remaining in the gas phase can be released to the atmosphere, and thus only the inert gas contained in the mixed gas can be removed.

Therefore, it is possible to easily separate the inert gas from the mixed gas and easily discharge the inert gas into the atmosphere without requiring the skill of the worker.

### (Modification Example of First Embodiment)

Fig. 4 is a diagram showing a configuration of a BOG treatment system in a modification example of the first embodiment of the present disclosure.

In the first embodiment described above, a case has been described in which the mixed gas in the gas phase is cooled and the ammonia is condensed by the heat exchanger 76 provided inside the casing main body portion 78. However, the present invention is not limited to this configuration. For example, as in a modification example of the first embodiment shown in Fig. 4, a cooling device 81 that cools the gas in the tower space 79 may be provided separately from the heat exchanger 76.

By being configured as in the modification example of the first embodiment, the mixed gas present in the tower space 79 separated upward from the liquid phase in the ammonia tank 10 can be cooled and the ammonia gas contained in the gas can be condensed to move downward from the tower space 79 by its self-weight.

Therefore, the ammonia contained in the gas released to the atmosphere from the atmosphere releasing line 69 can be further reduced.

### (Second Embodiment)

Next, a floating structure according to a second embodiment of the present disclosure will be described with reference to the drawings. The floating structure of the second embodiment is different from the floating structure of the first embodiment only in that the inert gas separator is provided at a position separated from the above of the condenser. Therefore, the same parts as those of the first embodiment described above will be assigned by the same reference numerals with reference to Fig. 1, and the description thereof will be omitted.

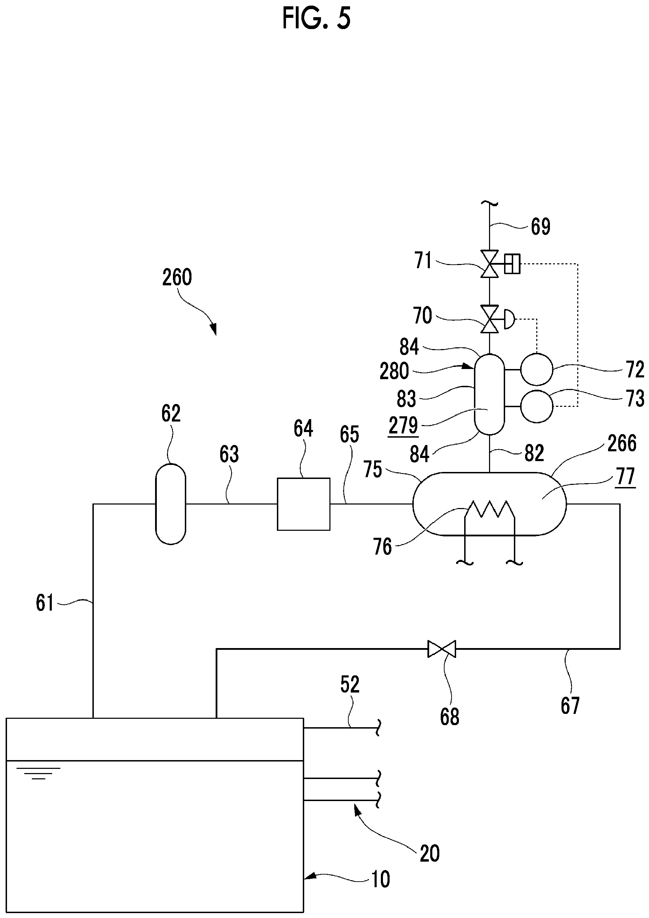

Fig. 5 is a diagram showing a configuration of a BOG treatment system according to a second embodiment of the present disclosure.

As shown in Figs. 1 and 5, the floating structure of the second embodiment includes the floating main structure 2, the superstructure 4, the combustion device 8, the ammonia tank 10, the fuel supply system 20, the gas supply system 30, the purge system 40, the ammonia recovery system 50, and the BOG treatment system 260.

As shown in Fig. 5, the BOG treatment system 260 includes a first treatment line (mixed gas delivery line) 61, a mist separator 62, a second treatment line 63, a compressor 64, a third treatment line 65, a condenser 266, a reliquefying line 67, an expansion valve 68, an inert gas separator (mixed gas introduction unit) 280, a condenser communication line 82, an atmosphere releasing line 69, a pressure adjustment valve 70, a shutoff valve 71, a pressure detecting unit 72, and an ammonia detecting unit 73.

The inert gas separator 280 is disposed above the condenser 266 to form a storage space 279 capable of storing the mixed gas. The inert gas separator 280 of the present embodiment has a shape elongated in the vertical direction. The volume of the storage space 279 in the inert gas separator 280 is smaller than the volume of the gas phase in the casing 75. In addition, the inert gas separator 280 of the present embodiment includes a cylindrical separator main body portion 83 and a mirror plate portion 84 that closes an upper edge and a lower edge of the separator main body portion 83. The atmosphere releasing line 69 of the present embodiment is connected to the mirror plate portion 84 of the upper portion of the inert gas separator 280.

The condenser communication line 82 is a pipe that allows the gas phase in the casing 75 of the condenser 266 and the storage space 279 of the inert gas separator 280 to communicate with each other. One end of the condenser communication line 82 of the present embodiment is connected to the upper wall of the casing 75, and the other end of the condenser communication line 82 is connected to the mirror plate portion 84 of the lower portion of the inert gas separator 280. The condenser communication line 82 of the present embodiment has a diameter smaller than the outer shape of the separator main body portion 83 of the inert gas separator 280 in the horizontal cross section. A plurality of the condenser communication lines 82 may be provided in parallel.

The pressure detecting unit 72 detects the pressure in the inert gas separator 280. The pressure detecting unit 72 of the present embodiment detects the pressure in the storage space 279 of the inert gas separator 280. The pressure detecting unit 72 outputs the detection result to the pressure adjustment valve 70, similarly to the pressure detecting unit 72 of the first embodiment.

The pressure adjustment valve 70 is provided in the atmosphere releasing line 69, and is capable of adjusting the pressure in the inert gas separator 280 when the inert gas is released to the atmosphere to a pressure capable of maintaining the ammonia in a liquid phase. The pressure adjustment valve 70 of the present embodiment automatically adjusts the valve opening degree based on the detection result of the pressure detecting unit 72 such that the pressure in the storage space 279 falls within a pressure range which is capable of maintaining the ammonia in the liquid phase. That is, the pressure adjustment valve 70 prevents the pressure in the casing 75 from being excessively reduced so that the condensed ammonia does not vaporize again.

The ammonia detecting unit 73 is capable of detecting the concentration of the gas-phase ammonia inside the inert gas separator 280. The ammonia detecting unit 73 of the present embodiment detects the concentration of the gas-phase ammonia in the storage space 279. As in the ammonia detecting unit 73 of the first embodiment, the ammonia detecting unit 73 outputs the detection result to the shutoff valve 71. The ammonia detecting unit 73 is not limited to the unit that detects the ammonia concentration, and for example, a density meter capable of measuring the density of ammonia may be used.

The shutoff valve 71 shuts off the atmosphere releasing line 69 in a case where the concentration of the gas-phase ammonia inside the inert gas separator 280 is higher than a predetermined upper limit value. On the other hand, the shutoff valve 71 opens the atmosphere releasing line 69 in a case where the concentration of the gas-phase ammonia inside the inert gas separator 280 is lower than a predetermined lower limit threshold value. The shutoff valve 71 of the present embodiment shuts off the atmosphere releasing line 69 in a case where the ammonia concentration is higher than a predetermined upper limit value, based on the detection result of the ammonia detecting unit 73, and opens the atmosphere releasing line 69 in a case where the ammonia concentration is lower than a predetermined lower limit threshold value. That is, the shutoff valve 71 prevents the ammonia gas from being released to the atmosphere together with the inert gas in a case where the uncondensed ammonia gas remains in the gas phase inside the inert gas separator 280.

### (Operations and Effects)

According to the second embodiment, the inert gas separator 280 is provided at a position separated from the above of the condenser 266, and the gas phase in the casing 75 of the condenser 266 and the storage space 279 of the inert gas separator 280 are communicated with each other by the condenser communication line 82.

In this manner, the uncondensed inert gas in the gas phase in the casing 75 of the condenser 266 can be guided to the storage space 279 of the inert gas separator 280 via the condenser communication line 82, and can be released to the atmosphere from the storage space 279 of the inert gas separator 280 via the atmosphere releasing line 69. In addition, even in a case where the uncondensed ammonia flows into the storage space 279 of the inert gas separator 280 together with the inert gas, the ammonia can be condensed in the storage space 279 of the inert gas separator 280 by the inert gas cooled by the condenser 266. Then, the ammonia condensed in the storage space 279 can be moved into the casing 75 of the condenser 266 by its self-weight via the condenser communication line 82.

Therefore, since the condenser 266 and the atmosphere releasing line 69 are separated from each other and the discharge of the ammonia via the atmosphere releasing line 69 can be further suppressed, the inert gas remaining in the gas phase of the ammonia tank 10 can be efficiently removed.

In addition, since only the inert gas separator 280 may be connected to the casing 75 via the condenser communication line 82, it is possible to easily increase the storage space 279 even in the casing 75 of the existing condenser.

According to the method for discharging an inert gas from the floating structure 1 of the second embodiment, the mixed gas is cooled inside the inert gas separator 280 into which the mixed gas of the inert gas and the ammonia is introduced, only the ammonia is condensed, the inert gas is released into the atmosphere, and when the inert gas is released into the atmosphere, the pressure inside the inert gas separator 280 is adjusted to the pressure at which the condensed ammonia can be maintained in a liquid phase.

In this manner, only the ammonia present in the gas phase in the inert gas separator 280 can be liquefied to allow only the inert gas to remain in the gas phase in the inert gas separator 280. Then, the inert gas remaining in the gas phase can be released to the atmosphere, and thus only the inert gas contained in the mixed gas can be removed.

Therefore, it is possible to easily separate the inert gas from the mixed gas and easily discharge the inert gas into the atmosphere without requiring the skill of the worker.

### (First Modification Example of Second Embodiment)

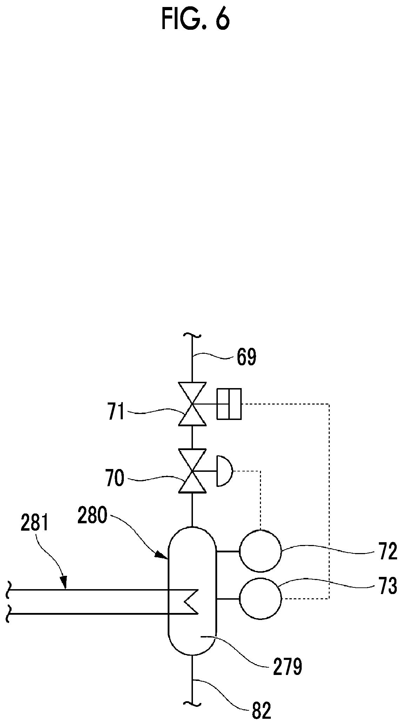

Fig. 6 is a diagram showing an inert gas separator and a cooling device in a first modification example of the second embodiment of the present disclosure.

In the above-described second embodiment, a case has been described in which the mixed gas is cooled and the ammonia is condensed by the heat exchanger 76 provided in the cooling space 77 of the casing 75. However, the present invention is not limited to this configuration. For example, as in the first modification example of the second embodiment shown in Fig. 6, a cooling device 281 that cools the mixed gas in the storage space 279 of the inert gas separator 280 may be provided separately from the heat exchanger 76 of the condenser 266. The cooling device 281 cools the mixed gas at the same temperature as the heat exchanger 76 of the condenser 266.

By configuring the present embodiment in the same manner as in the first modification example of the second embodiment, the gas present in the storage space 279 of the inert gas separator 280 can be positively cooled and therefore, the ammonia gas contained in the gas can be condensed and can be moved into the casing 75 of the condenser 266 via the condenser communication line 82 by the self-weight.

Therefore, the ammonia contained in the gas released to the atmosphere from the atmosphere releasing line 69 can be further reduced.

### (Second Modification Example of Second Embodiment)

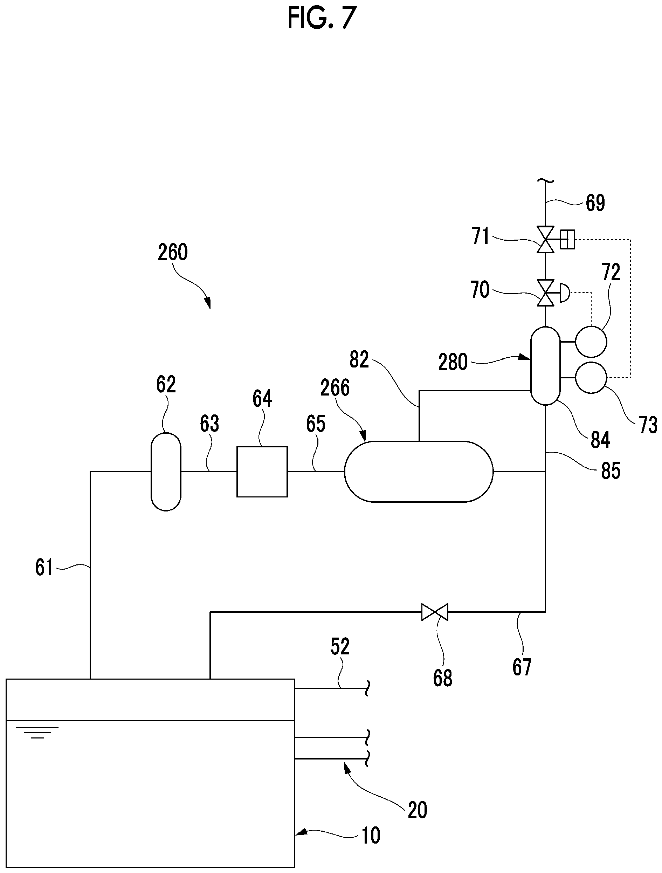

Fig. 7 is a diagram showing a configuration of a BOG treatment system according to a second modification example of the second embodiment of the present disclosure.

In the second embodiment described above, a case where the ammonia condensed in the storage space 279 of the inert gas separator 280 moves into the casing 75 of the condenser 266 via the condenser communication line 82 has been described. However, the present invention is not limited to this configuration. For example, as in a second modification example of the second embodiment shown in Fig. 7, a liquefied gas merging line 85 that merges the ammonia condensed in the storage space 279 of the inert gas separator 280 with the reliquefying line 67 may be provided separately from the condenser communication line 82. In the second modification example of the second embodiment, the end portion, which is connected to the inert gas separator 280, of both ends of the condenser communication line 82 is connected to the lower portion of the separator main body portion 83 of the inert gas separator 280. Further, an upper end of the liquefied gas merging line 85 is connected to the mirror plate portion 84 of the lower portion of the inert gas separator 280, and a lower end of the liquefied gas merging line 85 is merged and connected to the reliquefying line 67. In the second modification example, the cooling device 281 may be provided as in the first modification example.

By configuring the present embodiment in the same manner as the second modification example of the second embodiment, the mixed gas can be smoothly introduced from the gas phase of the condenser 266 into the storage space 279 of the inert gas separator 280 via the condenser communication line 82, and the ammonia condensed in the storage space 279 of the inert gas separator 280 can be smoothly merged to the reliquefying line 67 via the liquefied gas merging line 85 by the self-weight and stored in the ammonia tank 10.

### (Third Embodiment)

Next, a third embodiment of the present disclosure will be described with reference to the drawings. The floating structure of the third embodiment is provided in the ammonia tank 10 with the same configuration as the condenser tower portion 80 provided in the condenser 66 of the modification example of the first embodiment described above. Therefore, in the third embodiment, the same parts as those in the modification example of the first embodiment described above will be assigned the same reference numerals with reference to Fig. 1 and will be described, and the description of the same parts will be omitted.

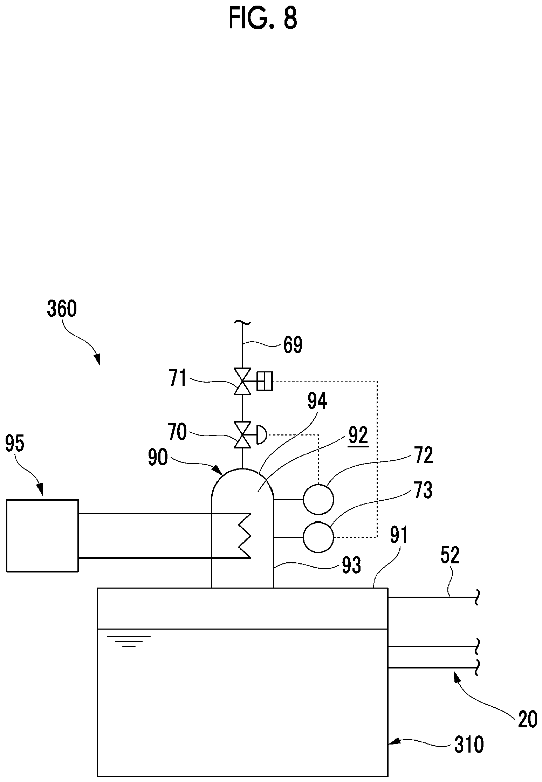

Fig. 8 is a diagram showing a configuration of a BOG treatment system according to a third embodiment of the present disclosure.

As shown in Figs. 1 and 8, the floating structure 1 of the third embodiment includes the floating main structure 2, the superstructure 4, the combustion device 8, the ammonia tank 310, the fuel supply system 20, the gas supply system 30, the purge system 40, the ammonia recovery system 50, and the BOG treatment system 360. That is, the configuration is adopted in which the inert gas flows into the gas phase of the ammonia tank 310 of the third embodiment as in the first embodiment.

### (BOG Treatment System)

As shown in Fig. 8, the BOG treatment system 360 includes a tank tower portion (mixed gas introduction unit) 90, a cooling unit 95, an atmosphere releasing line 69, a pressure adjustment valve 70, a shutoff valve 71, a pressure detecting unit 72, and an ammonia detecting unit 73.

The tank tower portion 90 is formed to protrude upward from the upper wall 91 of the ammonia tank 310. The tank tower portion 90 forms a tower space (storage space) 92 that communicates with the gas phase inside the ammonia tank 310. That is, the mixed gas present in the gas phase of the ammonia tank 310 can be stored in the tower space 92 of the tank tower portion 90. The tank tower portion 90 exemplified in the third embodiment includes a tower main body portion 93 that extends upward in a cylindrical shape from the upper wall of the ammonia tank 310, and a mirror plate portion 94 that closes an upper edge of the tower main body portion 93. In addition, the tower main body portion 93 of the present embodiment is formed to have a larger diameter than the atmosphere releasing line 69. The height of the tank tower portion 90 may be any height as long as the position of the upper end of the tower space 92 is higher than the uppermost portion of the gas phase of the ammonia tank 310. In the third embodiment, a case where the tank tower portion 90 is disposed in the central portion of the upper wall 91 of the ammonia tank 310 has been described as an example. However, the disposition of the tank tower portion 90 is not limited to the central portion of the upper wall 91.

The cooling unit 95 cools the mixed gas in the tower space 92 in the tank tower portion 90 to liquefy the ammonia contained in the mixed gas. The pressure in the tower space 92 in the tank tower portion 90 is a pressure lower than the pressure in the casing 75 of the condenser 66 (for example, a pressure slightly higher than the atmospheric pressure) of the first embodiment. Therefore, the cooling unit 95 of the third embodiment has higher cooling performance than each of the cooling devices 81 of the modification example of the first embodiment described above and the first modification example of the second embodiment. In other words, the cooling unit 95 has cooling performance capable of cooling the mixed gas to a temperature at which the ammonia contained in the mixed gas can be condensed under the pressure of the gas phase of the ammonia tank 310. Examples of the cooling unit 95 of the third embodiment include an absorption chiller and a steam compression chiller.

The atmosphere releasing line 69 is capable of releasing the gas in the tower space 92 to the atmosphere. The atmosphere releasing line 69 of the present embodiment is connected to the cooling space 77 formed in the tower space 92 at the uppermost position. Accordingly, the gas (composed substantially only of the inert gas) that is not condensed in the tower space 92 can be released to the atmosphere from the uppermost portion of the tower space 92 via the atmosphere releasing line 69.

The pressure detecting unit 72 detects the pressure in the tank tower portion 90. The pressure detecting unit 72 of the present embodiment detects the internal pressure of the tower space 92. The internal pressure of the tower space 92 in the present embodiment is substantially the same as the pressure of the gas phase of the ammonia tank 310. The pressure detecting unit 72 of the present embodiment outputs the detection result to the pressure adjustment valve 70.

The pressure adjustment valve 70 is provided in the atmosphere releasing line 69, and is capable of adjusting the pressure in the tank tower portion 90 when the inert gas is released to the atmosphere to a pressure at which the ammonia can be maintained in a liquid phase. The pressure adjustment valve 70 of the present embodiment automatically adjusts the valve opening degree based on the detection result of the pressure detecting unit 72 such that the pressure of the tower space 92 falls within a pressure range which is capable of maintaining the ammonia in the liquid phase. That is, by the pressure adjustment valve 70, the pressure in the tower space 92 prevents the pressure in the tower space 92 from being excessively reduced so that the ammonia condensed by the cooling unit 95 does not vaporize again in the tower space 92.

### (Operations and Effects)

According to the floating structure of the third embodiment, the mixed gas in the gas phase inside the ammonia tank 310 can be introduced into the tower space 92 of the tank tower portion 90, and the mixed gas in the tower space 92 can be cooled by the cooling unit 95. Therefore, only the ammonia contained in the mixed gas can be condensed in the tower space 92, and the condensed ammonia can be moved to the ammonia tank 310 by its self-weight. In addition, since only the inert gas can remain in the tower space 92, the inert gas remained in the tower space 92 can be released into the atmosphere via the atmosphere releasing line 69.

Therefore, the inert gas present in the gas phase of the ammonia tank 310 can be easily discharged without requiring the skill of the worker. Then, by discharging the inert gas from the gas phase of the ammonia tank 310, it is possible to suppress a decrease in the reliquefaction efficiency of the BOG and a decrease in calorific value in a case where the BOG is used as fuel.

According to the third embodiment, the atmosphere releasing line 69 is connected to the tank tower portion 90. Therefore, the inert gas can be discharged from higher position. Therefore, it is possible to prevent the BOG generated from the liquid phase of the ammonia tank 310 from mixing with the gas discharged via the atmosphere releasing line 69.

According to the third embodiment, the pressure adjustment valve 70 further includes the pressure detecting unit 72 that detects the pressure in the tower space 92, and the pressure adjustment valve 70 adjusts the valve opening degree such that the pressure in the tower space 92 is within a pressure range which is capable of maintaining the ammonia in the liquid phase, based on the detection result of the pressure detecting unit 72.

Accordingly, in a case where the inert gas is released to the atmosphere via the atmosphere releasing line 69, the pressure in the tower space 92 is reduced, and thus it is possible to prevent the condensed ammonia from being vaporized or the ammonia from not being condensed even when the ammonia is cooled.

According to the third embodiment, the ammonia detecting unit 73 capable of detecting the ammonia concentration in the tower space 92 and the shutoff valve 71 capable of opening and closing the atmosphere releasing line 69 are further provided. Then, the shutoff valve 71 shuts off the atmosphere releasing line 69 in a case where the ammonia concentration is higher than a predetermined upper limit value, based on the detection result of the ammonia detecting unit 73, and opens the atmosphere releasing line 69 in a case where the ammonia concentration is lower than a predetermined lower limit threshold value.

Accordingly, in a case where the ammonia concentration in the tower space 92 is high, it is possible to prevent the gas containing the ammonia from being released to the atmosphere via the atmosphere releasing line 69. In addition, in a case where the ammonia concentration is sufficiently low, the inert gas contained in the gas phase inside the casing 75 can be removed by releasing the inert gas to the atmosphere via the atmosphere releasing line 69.

According to the method for discharging an inert gas from the floating structure 1 of the third embodiment, the mixed gas is cooled inside the tank tower portion 90 into which the mixed gas of the inert gas and the ammonia is introduced, only the ammonia is condensed, and the inert gas is released into the atmosphere, and when the inert gas is released into the atmosphere, the pressure inside the tank tower portion 90 is adjusted to the pressure at which the condensed ammonia can be maintained in the liquid phase.

Accordingly, only the ammonia present in the gas phase in the tank tower portion 90 can be liquefied to remain only the inert gas in the gas phase in the tank tower portion 90. Then, the inert gas remaining in the gas phase can be released to the atmosphere, and thus only the inert gas contained in the mixed gas can be removed.

Therefore, it is possible to easily separate the inert gas from the mixed gas and easily discharge the inert gas into the atmosphere without requiring the skill of the worker.

### (Fourth Embodiment)

Next, a floating structure according to a fourth embodiment of the present disclosure will be described with reference to the drawings. The floating structure of the fourth embodiment is different from the floating structure of the third embodiment only in that the inert gas separator is provided at a position separated from the above of the ammonia tank instead of the above of the ammonia tank tower portion of the third embodiment. Therefore, the same parts as those in the third embodiment described above will be assigned by the same reference numerals, and redundant description will be omitted.

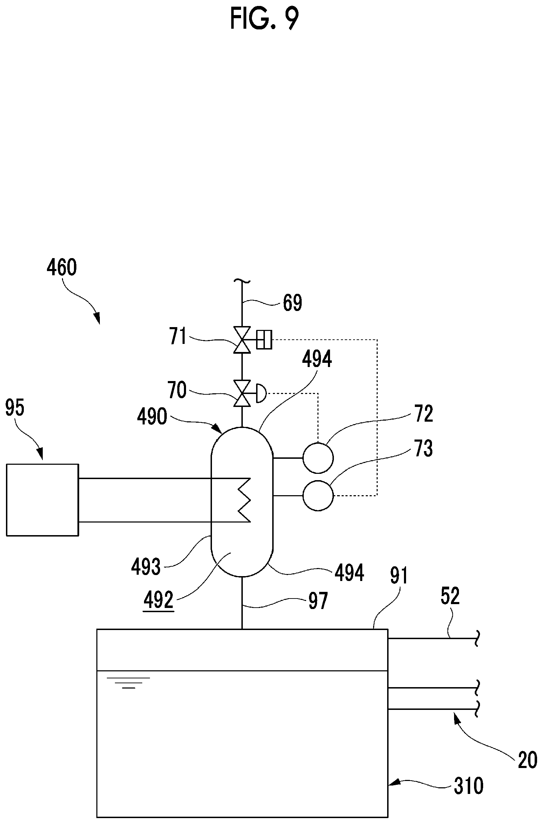

Fig. 9 is a diagram corresponding to Fig. 8 in the fourth embodiment of the present disclosure.

As shown in Fig. 9, the BOG treatment system 460 includes a tank communication line 97, an inert gas separator (mixed gas introduction unit) 490, a cooling unit 95, an atmosphere releasing line 69, a pressure adjustment valve 70, a shutoff valve 71, a pressure detecting unit 72, and an ammonia detecting unit 73.

The inert gas separator 490 is disposed above the ammonia tank 10 to form a storage space 492 capable of storing the mixed gas. The inert gas separator 490 of the present embodiment also has a shape elongated in the vertical direction, as in the inert gas separator 280 of the second embodiment. The volume of the storage space 492 in the inert gas separator 490 is smaller than the volume of the gas phase of the ammonia tank 10. In addition, the inert gas separator 490 of the present embodiment includes a cylindrical separator main body portion 493 and a mirror plate portion 494 that closes an upper edge and a lower edge of the separator main body portion 493. The atmosphere releasing line 69 of the present embodiment is connected to the mirror plate portion 494 of the upper portion of the inert gas separator 490.

The tank communication line 97 is a pipe that allows the gas phase of the ammonia tank 310 and the storage space 492 of the inert gas separator 490 to communicate with each other. One end of the tank communication line 97 of the present embodiment is connected to the upper wall 91 of the ammonia tank 310, and the other end of the tank communication line 97 is connected to the mirror plate portion 494 of the lower portion of the inert gas separator 490. The tank communication line 97 of the present embodiment has a diameter smaller than the outer shape of the separator main body portion 493 of the inert gas separator 490 in the horizontal cross section. Since the atmosphere releasing line 69, the pressure adjustment valve 70, the shutoff valve 71, the pressure detecting unit 72, and the ammonia detecting unit 73 have the same configuration as those of the second embodiment described above, detailed description thereof will be omitted.

### (Operations and Effects)

According to the fourth embodiment, the inert gas separator 490 is provided at a position separated from the above of the ammonia tank 310, and the gas phase of the ammonia tank 310 and the storage space 492 of the inert gas separator 490 are communicated with each other by the tank communication line 97.

Accordingly, the mixed gas present in the gas phase of the ammonia tank 310 is guided to the storage space 492 of the inert gas separator 490 via the tank communication line 97, and the ammonia contained in the mixed gas can be condensed by the cooling unit 95 in the storage space 492 of the inert gas separator 490. Therefore, only the inert gas remaining without being condensed in the storage space 492 of the inert gas separator 490 can be discharged via the atmosphere releasing line 69. In addition, the ammonia condensed in the storage space 492 can be moved to the ammonia tank 310 by its self-weight via the tank communication line 97.

Therefore, since the discharge of the ammonia via the atmosphere releasing line 69 can be further suppressed, the inert gas remaining in the gas phase of the ammonia tank 310 can be efficiently removed.

In addition, since only the inert gas separator 490 may be connected to the ammonia tank 310 via the tank communication line 97, it is possible to easily increase the storage space 492 even in the existing ammonia tank.

According to the method for discharging an inert gas from the floating structure 1 of the fourth embodiment, the mixed gas is cooled inside the inert gas separator 490 into which the mixed gas of the inert gas and the ammonia is introduced, only the ammonia is condensed, the inert gas is released into the atmosphere, and when the inert gas is released into the atmosphere, the pressure inside the inert gas separator 490 is adjusted to the pressure at which the condensed ammonia can be maintained in a liquid phase.

In this manner, only the ammonia present in the gas phase in the inert gas separator 490 can be liquefied to allow only the inert gas to remain in the gas phase in the inert gas separator 490. Then, the inert gas remaining in the gas phase can be released to the atmosphere, and thus only the inert gas contained in the mixed gas can be removed.

Therefore, it is possible to easily separate the inert gas from the mixed gas and easily discharge the inert gas into the atmosphere without requiring the skill of the worker.

### (Fifth Embodiment)

Next, a floating structure according to a fifth embodiment of the present disclosure will be described with reference to the drawings. The floating structure of the fifth embodiment is different from the floating structure of the third embodiment only in that the ammonia tank of the third embodiment described above is used as the pressure tank, and the liquefied ammonia stored in the storage tank serving as the other ammonia tank is used as the refrigerant of the cooling unit 95. Therefore, the same parts as those of the third embodiment described above will be assigned by the same reference numerals with reference to Fig. 1, and the description thereof will be omitted.

### (Configuration of Floating structure)

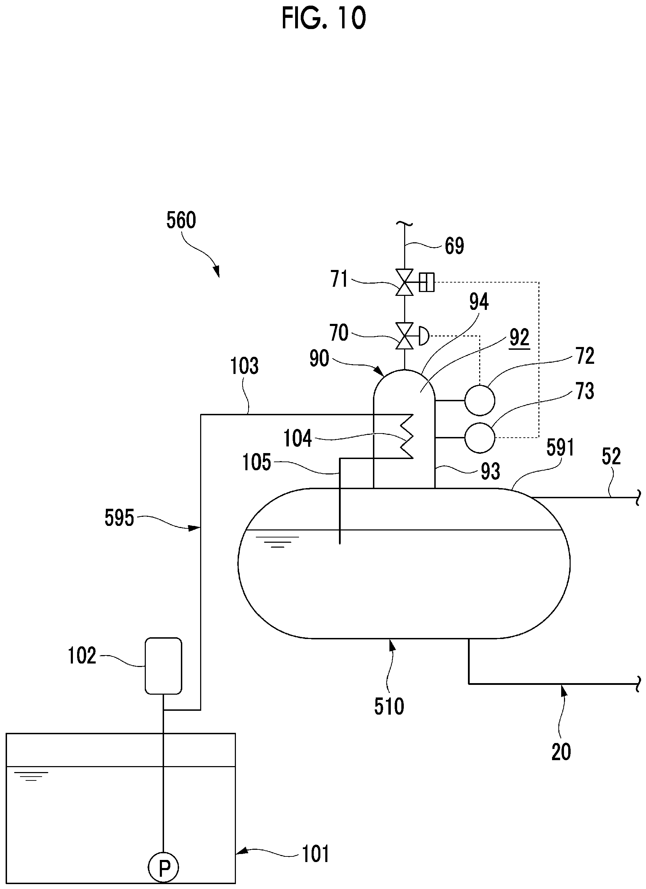

Fig. 10 is a diagram corresponding to Fig. 9 in the fifth embodiment of the present disclosure.

As shown in Figs. 1 and 10, the floating structure 1 of the fifth embodiment includes the floating main structure 2, the superstructure 4, the combustion device 8, the ammonia tank 510, the storage tank 101, the fuel supply system 20, the gas supply system 30, the purge system 40, the ammonia recovery system 50, and the BOG treatment system 560. In the fifth embodiment, as the tank that stores the ammonia, the ammonia tank (high-pressure tank) 510 that stores the ammonia at a pressure higher than the atmospheric pressure, and the storage tank (low-pressure tank) 101 that stores the ammonia at a lower temperature and a lower pressure than the ammonia tank 510 are provided.

The ammonia tank 510 is a so-called pressure tank capable of storing the liquefied ammonia in a state of a pressure higher than an atmospheric pressure and a temperature higher than that of the storage tank 101 (for example, a room temperature). Examples of the ammonia tank 510 include a service tank and a mixing chamber. In the fifth embodiment, at least the ammonia tank 510 is configured to allow the mixed fluid of the inert gas and the ammonia discharged by the purge system 40 of the first embodiment described above to flow in via the recovery line 52.

The storage tank 101 is, for example, a cargo tank or the like, and examples thereof include a tank that stores liquefied ammonia in a predetermined pressure range close to an atmospheric pressure. In general, the storage tank 101 is covered with a heat insulating material that suppresses heat input from the outside, and the ammonia stored in the storage tank 101 is held at a temperature (low temperature) at which the liquid phase can be maintained at the predetermined pressure. The ammonia tank 10 capable of reliquefying the BOG by the BOG treatment system 60 of the first embodiment may be used as the storage tank 101.

### (BOG Treatment System)

The BOG treatment system 560 of the fifth embodiment includes the tank tower portion (mixed gas introduction unit) 90, the cooling unit 595, the atmosphere releasing line 69, the pressure adjustment valve 70, the shutoff valve 71, the pressure detecting unit 72, and the ammonia detecting unit 73. Since the atmosphere releasing line 69, the pressure adjustment valve 70, the shutoff valve 71, the pressure detecting unit 72, and the ammonia detecting unit 73 have the same configuration as those in the third embodiment, detailed description thereof will be omitted.

The tank tower portion 90 protrudes upward from the upper wall 591 of the ammonia tank 510. The tank tower portion 90 forms a tower space (storage space) 92 that communicates with the gas phase inside the ammonia tank 10. That is, the mixed gas present in the gas phase of the ammonia tank 510 can be stored in the tower space 92 of the tank tower portion 90. The tank tower portion 90 exemplified in the fifth embodiment has the same configuration as the tank tower portion 90 of the third embodiment, and includes the tower main body portion 93 that extends upward in a cylindrical shape from the ammonia tank 510, and the mirror plate portion 94 that closes the upper edge of the tower main body portion 93.

The cooling unit 595 cools the mixed gas in the tank tower portion 90 to a temperature at which only the ammonia in the mixed gas can be condensed. The cooling unit 595 includes the refrigerant pump 102, the refrigerant supply line 103, the cooling unit main body 104, and the refrigerant introduction line 105.

The refrigerant pump 102 pumps the low-temperature ammonia stored in the storage tank 101 toward the cooling unit main body 104.

The refrigerant supply line 103 is a pipe that guides the low-temperature ammonia ejected from the refrigerant pump 102. The refrigerant supply line 103 supplies the low-temperature ammonia ejected from the refrigerant pump 102 to the cooling unit main body 104.

The cooling unit main body 104 is a so-called heat exchanger and is disposed in the tower space 92. The cooling unit main body 104 exchanges heat between the low-temperature ammonia supplied via the refrigerant supply line 103 and the mixed gas in the tower space 92. As a result, only the ammonia contained in the mixed gas in the tower space 92 is condensed.

The refrigerant introduction line 105 supplies the ammonia as a refrigerant, which is heat-exchanged with the mixed gas by the cooling unit main body 104, into the ammonia tank 510.

### (Operations and Effects)

According to the fifth embodiment, the mixed gas in the tower space 92 of the tank tower portion 90 can be cooled by using the low-temperature ammonia stored in the storage tank 101 as a refrigerant, and only the ammonia can be condensed. In addition, since the ammonia used as the refrigerant can be stored in the liquid phase of the ammonia tank 510, it is also possible to suppress a temperature rise in the liquid phase of the ammonia tank 510.

Therefore, energy saving can be achieved as compared with a case where the cooling unit 95 or the like having the refrigerating cycle as in the third embodiment is used.

### (Modification Example of Fifth Embodiment)

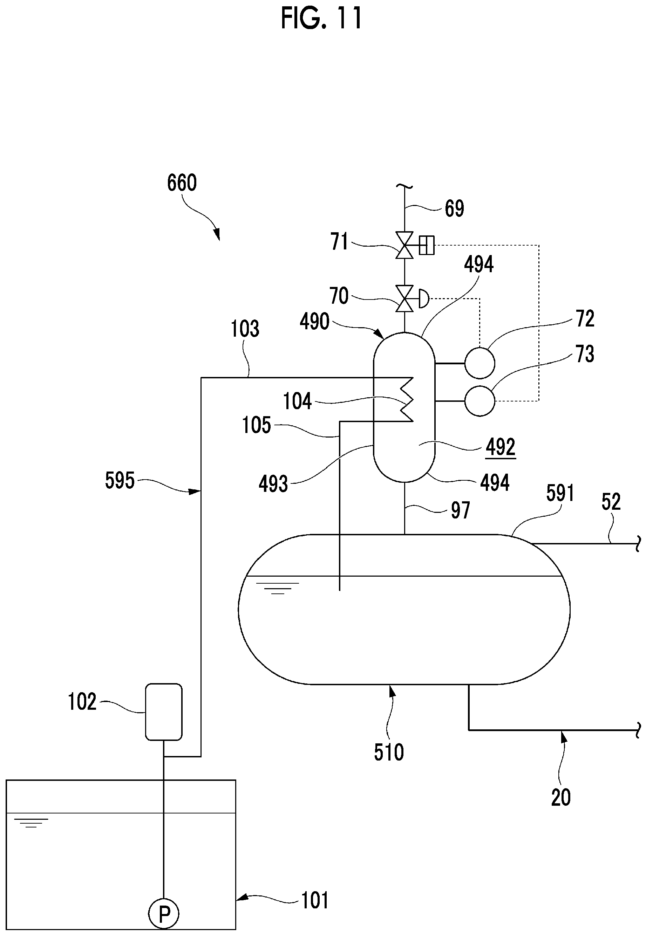

Fig. 11 is a diagram corresponding to Fig. 10 in a modification example of the fifth embodiment of the present disclosure.

In the fifth embodiment described above, a case where the BOG treatment system 560 includes the tank tower portion 90 having the tower space 92 communicating with the gas phase of the ammonia tank 510 and the cooling unit main body 104 is disposed in the tower space 92 has been described as an example. However, the cooling unit 595 of the fifth embodiment can also be applied to a configuration including the inert gas separator 490 as in the fourth embodiment. Specifically, as in the BOG treatment system 660 of the modification example of the fifth embodiment shown in Fig. 11, the cooling unit main body 104 of the cooling unit 595 may be installed in the storage space 492 of the inert gas separator 490 provided at a position separated from the above of the ammonia tank 510.

By configuring the present embodiment in the same manner as in the modification example of the fifth embodiment, even in a case where the inert gas separator 490 is provided at a position separated from the above of the ammonia tank 510 instead of the above of the tank tower portion 90, it is possible to achieve energy saving as in the fifth embodiment.

### (Other Embodiments)

The present disclosure is not limited to the configurations of each of the above-described embodiments and modification examples, and changes can be made to the design without departing from the concept of the invention.

For example, the shape of the condenser tower portion 80, the tank tower portion 90, and the inert gas separator 280 and 490 is not limited to the shapes of the above-described respective embodiments and modification examples as long as the tower space 79 and 92 and the storage space 279 and 492 can be formed.

In the first embodiment described above, a case where the casing 75 has the condenser tower portion 80 has been described. However, for example, in a case where a space capable of storing an inert gas is formed on the upper portion of the cooling space 77 in the casing 75, the space may be used as the tower space 79, and the condenser tower portion 80 may be omitted.

In each of the above-described embodiments and modification examples, a case where the closed shutoff valve 71 is opened in a case where the ammonia concentration is reduced to equal to or lower than the lower limit threshold value has been described. However, the shutoff valve 71 may be gradually opened.

Further, the atmosphere releasing line 69 of each of the embodiments and the modification examples may be provided with a sensor that detects the flow of the inert gas on the downstream side of the shutoff valve 71.

In addition, in each of the above-described embodiments and modification examples, a case where the floating structure 1 is a ship that can navigate by a main engine or the like has been described. However, the floating structure is not limited to a ship as long as the floating structure is capable of storing ammonia.

Further, in each of the above-described embodiments and modification examples, a case where the inert gas mixed in the gas phase of the ammonia tank is removed by the fuel purging has been described. However, the inert gas mixed in the gas phase of the ammonia tank is not limited to the inert gas mixed by the fuel purging. For example, the gas may be a seal gas of a compressor.

In addition, in each of the above-described embodiments and modification examples, a case has been described in which the pressure adjustment valve 70 and the shutoff valve 71 provided in the atmosphere releasing line 69 are automatically controlled based on the detection results of the pressure detecting unit 72 and the ammonia detecting unit 73. However, for example, the pressure adjustment valve 70 and the shutoff valve 71 may be manually operated by the worker, respectively, based on the detection results of the pressure detecting unit 72 and the ammonia detecting unit 73.

Further, in each of the above-described embodiments and modification examples, a case has been described in which the inert gas is released into the atmosphere via the atmosphere releasing line 69. However, the inert gas may be released into the atmosphere via a removal device (not shown) capable of removing ammonia.

### <Additional Notes>

For example, the floating structure described in the embodiment is ascertained as follows.
(1) According to a first aspect, a floating structure 1 includes a floating main structure 2 that floats on water; tanks 10, 310, and 510 in which ammonia is stored together with an inert gas; mixed gas introduction units 75, 80, 90, 280, and 490 into which a mixed gas of the inert gas and the ammonia is introduced from the tank s10, 310, and 510; cooling units 76 and 95 that cools the mixed gas in the mixed gas introduction units 75, 80, 90, 280, and 490 at a temperature at which only the ammonia of the mixed gas is condensable; an atmosphere releasing line 69 through which the inert gas in the mixed gas introduction units 75, 80, 90, 280, and 490 is capable of being released to an atmosphere; and a pressure adjustment valve 70 that adjusts a pressure in the mixed gas introduction units 75, 80, 90, 280, and 490 when the inert gas is released to the atmosphere to a pressure at which the ammonia is capable of being maintained in a liquid phase.
   Examples of the floating structure 1 include a ship. Examples of the floating main structure 2 include a hull. Examples of the inert gas include a nitrogen gas.
   In this manner, only the ammonia in the mixed gas introduced into the mixed gas introduction units 75, 80, 90, 280, and 490 is condensed to remain only the inert gas in the gas phase, and the inert gas remaining in the gas phase can be released to the atmosphere via the atmosphere releasing line 69.
(2) The floating structure 1 according to a second aspect provides the floating structure 1 according to (1), which further includes mixed gas delivery lines 61, 63, and 65 that guides the mixed gas from the tank to the mixed gas introduction unit; a compressor 64 that compresses the mixed gas guided by the mixed gas delivery lines 61, 63, and 65; condensers 66 and 266 that condenses an ammonia gas contained in the mixed gas compressed by the compressor 64, as the mixed gas introduction unit; and a reliquefying line 67 that returns the liquefied ammonia condensed by the condensers 66 and 266 to the tank 10, in which the atmosphere releasing line 69 communicates with a gas phase inside a casing 75 of the condensers 66 and 266. Accordingly, in the floating structure 1 including the so-called reliquefaction device including the mixed gas delivery line 61, the compressor 64, the condenser 66, and the reliquefying line 67, only the ammonia can be condensed by the condenser 66 to allow the inert gas to remain in the gas phase in the casing 75, and the inert gas can be released to the atmosphere via the atmosphere releasing line 69.
(3) The floating structure 1 according to a third aspect provides the floating structure 1 according to (2), in which the casing 75 includes a casing main body portion 78, and a condenser tower portion 80 that protrudes upward from an upper portion of the casing main body portion 78 and forms a storage space 79 capable of storing the inert gas, and the atmosphere releasing line 69 is connected to the condenser tower portion 80.
   Accordingly, the inert gas can be discharged from the storage space 79 disposed higher in the space in the casing 75.
(4) The floating structure 1 according to a fourth aspect provides the floating structure 1 according to (1), which includes mixed gas delivery lines 61, 63, and 65 that guides the mixed gas from the tank 10 to the mixed gas introduction units 66 and 266; a compressor 64 that compresses the mixed gas guided by the mixed gas delivery lines 61, 63 and 65; a condenser 266 that condenses an ammonia gas contained in the mixed gas compressed by the compressor 64; a reliquefying line 67 that returns the liquefied ammonia condensed by the condenser 266 to the tank 10; an inert gas separator 280 that is disposed above the condenser 266 and forms a storage space 279 capable of storing the inert gas, as the mixed gas introduction unit; and a condenser communication line 82 that allows a gas phase in a casing 75 of the condenser 266 and the storage space 279 to communicate with each other.
   In this manner, the inert gas remaining without being condensed in the gas phase in the casing 75 of the condenser 66 can be guided to the storage space 279 of the inert gas separator 280 via the condenser communication line 82, and the inert gas can be discharged from the storage space 279 of the inert gas separator 280 via the atmosphere releasing line 69.
(5) The floating structure 1 according to fifth aspect provides the floating structure 1 according to (4), in which a liquefied gas merging line 85 that merges the ammonia liquefied by the inert gas separator 280 with the reliquefying line 67.
   Accordingly, the ammonia condensed in the storage space 279 of the inert gas separator 280 can smoothly merge with the reliquefying line 67 via the liquefied gas merging line 85.
(6) The floating structure 1 according to sixth aspect provides the floating structure 1 according to (3) to (5), which includes cooling devices 81 and 281 that cools the mixed gas stored in the storage spaces 79 and 279 to liquefy the ammonia contained in the mixed gas.
   Accordingly, the mixed gas present in the storage spaces 79 and 279 at a position away from the liquid phase can be cooled, and the ammonia gas contained in the mixed gas can be condensed.
(7) The floating structure 1 according to seventh aspect provides the floating structure 1 according to (1), in which the tank 310 includes a tank tower portion 90 that protrudes upward from upper walls 91 and 591 of the tank 310 and forms a storage space 92 capable of storing the inert gas communicating with a gas phase inside the tank 310, as the mixed gas introduction unit, the cooling units 95 and 595 cools the mixed gas in the storage space 92, and the atmosphere releasing line 69 is connected to the tank tower portion 90.
   Accordingly, only the ammonia contained in the mixed gas can be condensed in the tower space 92, and the condensed ammonia can be moved to the ammonia tank 310 by its self-weight. In addition, since only the inert gas can remain in the tower space 92, the inert gas remained in the tower space 92 can be released into the atmosphere via the atmosphere releasing line 69.
(8) The floating structure 1 according to eighth aspect provides the floating structure 1 according to (1), which includes an inert gas separator 490 that is disposed above the tank 310 and forms a storage space 492 capable of storing the inert gas, as the mixed gas introduction unit; and a tank communication line 97 that allows a gas phase inside the tank 310 and the storage space 492 to communicate with each other, in which the cooling units 95 and 595 cools the mixed gas in the storage space 492, and the atmosphere releasing line 69 is connected to the inert gas separator 490.
   Accordingly, the mixed gas present in the gas phase of the ammonia tank is guided to the storage space 492 of the inert gas separator 490 via the tank communication line 97, and the ammonia contained in the mixed gas can be condensed by the cooling units 95 and 595 in the storage space 492 of the inert gas separator 490. Therefore, only the inert gas remaining without being condensed in the storage space 492 of the inert gas separator 490 can be discharged via the atmosphere releasing line 69. Furthermore, the ammonia condensed in the storage space 492 can be moved to the tank 310 by its self-weight via the tank communication line 97.
(9) The floating structure 1 according to ninth aspect provides the floating structure 1 according to (7) or (8), in which the tank is a high-pressure tank 510 that stores the ammonia at a pressure higher than an atmospheric pressure, the floating structure 1 further includes a low-pressure tank 101 that stores the ammonia at a lower temperature and a lower pressure than the high-pressure tank 510, and the cooling unit 95 cools the mixed gas by using the ammonia stored in the low-pressure tank 101 as a refrigerant, and introduces the ammonia, which has cooled the mixed gas, into the high-pressure tank 510.
   Accordingly, the mixed gas in the storage space 92 of the tank tower portion 90 can be cooled by using the low-temperature ammonia stored in the low-pressure tank 101 as a refrigerant, and only the ammonia can be condensed. In addition, since the ammonia used as the refrigerant can be stored in the liquid phase of the high-pressure tank 510, it is also possible to suppress a temperature rise in the liquid phase of the high-pressure tank 510.
(10) The floating structure 1 according to tenth aspect provides the floating structure 1 according to (1), to (9), which includes a pressure detecting unit 72 that detects the pressure inside the mixed gas introduction units 75, 80, 90, 280, and 490, in which the pressure adjustment valve 70 adjusts a valve opening degree such that the pressure inside the mixed gas introduction units 75, 80, 90, 280, and 490 falls within a pressure range which is capable of maintaining the ammonia in a liquid phase, based on a detection result of the pressure detecting unit 72.
   Accordingly, it is possible to prevent a decrease in the internal pressure of the mixed gas introduction units 75, 80, 90, 280, and 490 in a case where the inert gas is released to the atmosphere via the atmosphere releasing line 69.
(11) The floating structure 1 according to eleventh aspect provides the floating structure 1 according to (1), to (10), which includes an ammonia detecting unit 73 that is capable of detecting a concentration of the gas-phase ammonia inside the mixed gas introduction units 75, 80, 90, 280, and 490; and a shutoff valve 71 that shuts off the atmosphere releasing line 69 in a case where the ammonia concentration is higher than a predetermined upper limit value, and that opens the atmosphere releasing line 69 in a case where the ammonia concentration is lower than a predetermined lower limit threshold value, based on a detection result of the ammonia detecting unit 73.
   Accordingly, in a case where the ammonia concentration in the mixed gas introduction units 75, 80, 90, 280, and 490 is high, it is possible to prevent the gas containing the ammonia from being released to the atmosphere via the atmosphere releasing line 69.
(12) According to a twelfth aspect, there is provided a method for discharging an inert gas from a floating structure 1 in which ammonia is stored with the inert gas, the method includes cooling a mixed gas of the inert gas and the ammonia inside mixed gas introduction units 75, 80, 90, 280, and 490 into which the mixed gas is introduced to condense only the ammonia and release the inert gas into an atmosphere; and adjusting a pressure inside the mixed gas introduction unit to a pressure that is capable of maintaining the condensed ammonia in a liquid phase when the inert gas is released into the atmosphere.

Examples of the floating structure 1 include a ship. Examples of the inert gas include a nitrogen gas.

In this manner, only the ammonia in the mixed gas introduced into the mixed gas introduction units 75, 80, 90, 280, and 490 is condensed to remain only the inert gas in the gas phase, and the inert gas remaining in the gas phase can be released to the atmosphere via the atmosphere releasing line 69.

### Industrial Applicability

According to a floating structure and a method for discharging an inert gas from the floating structure according to the present disclosure, the inert gas can be easily discharged.

### Reference Signs List

1: Floating structure
2: Floating main structure
3a: Bow
3b: Stern
4: Superstructure
6: Bottom
7: Upper deck
8: Combustion device
10, 310, 510: Ammonia tank
20: Fuel supply system
21: Supply line
22: Return line
30: Gas supply system
34: Inert gas supply unit
35: Inert gas supply pipe
36: Inert gas supply valve
40: Purge system
50: Ammonia recovery system
51: Temporary storage unit
52: Recovery line
60, 260, 360, 460, 560, 660: BOG treatment system
61: First treatment line
62: Mist separator
63: Second treatment line
64: Compressor
65: Third treatment line
66, 266: Condenser
67: Reliquefying line
68: Expansion valve
69: Atmosphere releasing line
70: Pressure adjustment valve
71: Shutoff valve
72: Pressure detecting unit
73: Ammonia detecting unit
75: Casing
76: Heat exchanger
77: Cooling space
78: Casing main body portion
79: Tower space
80: Condenser tower portion
81, 281: Cooling device
82: Condenser communication line
83: Separator main body portion
84: Mirror plate portion
85: Liquefied gas merging line
90: Tank tower portion
91: Upper wall
92: Tower space
93: Tower main body portion
94, 494: Mirror plate portion
95: Cooling unit
97: Tank communication line
101: Storage tank
102: Refrigerant pump
279, 492: Storage space
280, 490: Inert gas separator
493: Separator main body portion
R: Flow channel

## Claims

1. A floating structure comprising:
a floating main structure that floats on water;
a tank in which ammonia is stored together with an inert gas;
a mixed gas introduction unit into which a mixed gas of the inert gas and the ammonia is introduced;
a cooling unit that cools the mixed gas in the mixed gas introduction unit at a temperature at which only the ammonia of the mixed gas is condensable;
an atmosphere releasing line through which the inert gas in the mixed gas introduction unit is capable of being released to an atmosphere; and
a pressure adjustment valve that adjusts a pressure in the mixed gas introduction unit when the inert gas is released to the atmosphere to a pressure at which the ammonia is capable of being maintained in a liquid phase.

2. The floating structure according to Claim 1, further comprising:
a mixed gas delivery line that guides the mixed gas from the tank to the mixed gas introduction unit;
a compressor that compresses the mixed gas guided by the mixed gas delivery line;
a condenser that condenses an ammonia gas contained in the mixed gas compressed by the compressor, as the mixed gas introduction unit; and
a reliquefying line that returns the liquefied ammonia condensed by the condenser to the tank,
wherein the atmosphere releasing line communicates with a gas phase inside a casing of the condenser.

3. The floating structure according to Claim 2, wherein
the casing includes a casing main body portion, and a condenser tower portion that protrudes upward from an upper portion of the casing main body portion and forms a storage space capable of storing the inert gas, and
the atmosphere releasing line is connected to the condenser tower portion.

4. The floating structure according to Claim 1, further comprising:
a mixed gas delivery line that guides the mixed gas from the tank to the mixed gas introduction unit;
a compressor that compresses the mixed gas guided by the mixed gas delivery line;
a condenser that condenses an ammonia gas contained in the mixed gas compressed by the compressor;
a reliquefying line that returns the liquefied ammonia condensed by the condenser to the tank;
an inert gas separator that is disposed above the condenser and forms a storage space capable of storing the inert gas, as the mixed gas introduction unit; and
a condenser communication line that allows a gas phase in a casing of the condenser and the storage space to communicate with each other.

5. The floating structure according to Claim 4, further comprising:
a liquefied gas merging line that merges the ammonia liquefied by the inert gas separator with the reliquefying line.

6. The floating structure according to any one of Claims 3 to 5, further comprising:
a cooling device that cools the mixed gas in the storage space to liquefy the ammonia contained in the mixed gas.

7. The floating structure according to Claim 1, wherein
the tank includes a tank tower portion that protrudes upward from an upper wall of the tank and forms a storage space capable of storing the inert gas communicating with a gas phase inside the tank, as the mixed gas introduction unit,
the cooling unit cools the mixed gas in the storage space, and
the atmosphere releasing line is connected to the tank tower portion.

8. The floating structure according to Claim 1, further comprising:
an inert gas separator that is disposed above the tank and forms a storage space capable of storing the inert gas, as the mixed gas introduction unit; and
a tank communication line that allows a gas phase inside the tank and the storage space to communicate with each other,
wherein the cooling unit cools the mixed gas in the storage space, and
the atmosphere releasing line is connected to the inert gas separator.

9. The floating structure according to claim 7 or 8, wherein
the tank is a high-pressure tank that stores the ammonia at a pressure higher than an atmospheric pressure,
the floating structure further comprises a low-pressure tank that stores the ammonia at a lower temperature and a lower pressure than the high-pressure tank, and
the cooling unit cools the mixed gas by using the ammonia stored in the low-pressure tank as a refrigerant, and introduces the ammonia, which has cooled the mixed gas, into the high-pressure tank.

10. The floating structure according to any one of claims 1 to 5, further comprising:
a pressure detecting unit that detects the pressure inside the mixed gas introduction unit,
wherein the pressure adjustment valve adjusts a valve opening degree such that the pressure inside the mixed gas introduction unit falls within a pressure range which is capable of maintaining the ammonia in a liquid phase, based on a detection result of the pressure detecting unit.

11. The floating structure according to any one of claims 1 to 5, further comprising:
an ammonia detecting unit that is capable of detecting an ammonia concentration in a gas phase inside the mixed gas introduction unit; and
a shutoff valve that shuts off the atmosphere releasing line in a case where the ammonia concentration is higher than a predetermined upper limit value, and that opens the atmosphere releasing line in a case where the ammonia concentration is lower than a predetermined lower limit threshold value, based on a detection result of the ammonia detecting unit.

12. A method for discharging an inert gas from a floating structure in which ammonia is stored together with the inert gas, the method comprising:
cooling a mixed gas of the inert gas and the ammonia inside a mixed gas introduction unit into which the mixed gas is introduced to condense only the ammonia and release the inert gas into an atmosphere; and
adjusting a pressure inside the mixed gas introduction unit to a pressure that is capable of maintaining the condensed ammonia in a liquid phase when the inert gas is released into the atmosphere.
